Europäisches Patentamt

European Patent Office

Office européen des brevets

(19)

(11) **EP 1 123 352 B1**

(12) **EUROPÄISCHE PATENTSCHRIFT**

(45) Veröffentlichungstag und Bekanntmachung des Hinweises auf die Patenterteilung:
**26.03.2003  Patentblatt 2003/13**

(51) Int Cl.⁷: **C08L 69/00**
  // (C08L69/00, 51:00),
 C08L101:00

(21) Anmeldenummer: **99950631.4**

(22) Anmeldetag: **05.10.1999**

(86) Internationale Anmeldenummer:
**PCT/EP99/07435**

(87) Internationale Veröffentlichungsnummer:
**WO 00/020507 (13.04.2000 Gazette 2000/15)**

(54) **GEHÄUSE UND ABDECKUNGEN FÜR FILTER, PUMPEN UND MOTOREN**

HOUSING AND COVERS FOR FILTER, PUMPS AND MOTORS

CARTERS ET ELEMENTS DE RECOUVREMENT POUR FILTRES, POMPES ET MOTEURS

(84) Benannte Vertragsstaaten:
**DE**

(30) Priorität: **07.10.1998  DE 19846203**

(43) Veröffentlichungstag der Anmeldung:
**16.08.2001   Patentblatt 2001/33**

(73) Patentinhaber: **BASF AKTIENGESELLSCHAFT
67056 Ludwigshafen (DE)**

(72) Erfinder:
 • **GÖRRISSEN, Heiner
  D-67069 Ludwigshafen (DE)**
 • **MC KEE, Graham, Edmund
  D-67433 Neustadt (DE)**
 • **NIESSNER, Norbert
  D-67159 Friedelsheim (DE)**

 • **GÜNTHERBERG, Norbert
  D-67346 Speyer (DE)**
 • **WEBER, Martin
  D-67487 Maikammer (DE)**

(74) Vertreter: **Isenbruck, Günter, Dr. et al
Isenbruck, Bösl, Hörschler, Wichmann, Huhn,
Patentanwälte
Theodor-Heuss-Anlage 12
68165 Mannheim (DE)**

(56) Entgegenhaltungen:
**DE-A- 3 631 539       DE-A- 19 630 061
DE-A- 19 630 143**

 • **BLINNE G. AND KNOLL M.: "Die Zweite
  Generation" PLASTVERARBEITER, Bd. 47, Nr. 3,
  1996, Seiten 82-83, XP002126700**

**Beschreibung**

Die Erfindung betrifft Gehäuse und Abdeckungen für Filter, Pumpen und Motoren. Insbesondere betrifft die Erfindung derartige Gehäuse und Abdeckungen mit gleichzeitig guter Maßhaltigkeit, großer Stabilität, guter Chemikalienbeständigkeit und guter Vergilbungsbeständigkeit.

Für die Herstellung von Gehäusen und Abdeckungen für Filter, Pumpen und Motoren werden bislang verschiedene Werkstoffe eingesetzt. Beispielsweise kommen ABS (Acrlynitril/Butadien/Styrol)-Polymerisate zum Einsatz. Ein Nachteil von ABS ist seine nicht immer ausreichende Vergilbungsbeständigkeit. Zudem sind das Spannungsrißverhalten gegenüber Reinigungsmitteln und Alkoholen und die Kratzfestigkeit für viele Anwendungen zu gering. Die Quellung und Verfärbung der Oberfläche bei Benzinkontakt und die Permeabilität gegen Wasser und Gase ist zu hoch.

Der Einsatz von PMMA (Polymethylmethacrylat) ist wegen der geringen Schlagzähigkeit des Materials und der schlechten Beständigkeit gegen Spannungsrißkorrosion beim Kontakt mit Reinigungsmitteln und Alkoholen häufig unvorteilhaft.

Aus ASA (Acrylat/Styrol/Acrylnitril)-Formmassen mit einem geringen Gehalt an Polycarbonat aufgebaute Gehäuse und Abdeckungen haben nicht für alle Anwendungen eine ausreichende Kratzfestigkeit und Farbtiefe, und das Quellungsverhalten insbesondere beim Kontakt mit Benzin ist noch unzureichend.

Aufgabe der vorliegenden Erfindung ist es daher, Gehäuse und Abdeckungen für Filter, Pumpen und Motoren bereitzustellen, die stabil und chemikalienbeständig sind und nicht vergilben. Zudem sollen sie kratzfest sein und eine gute Maßhaltigkeit aufweisen. Die UV- und Wärmealterungsbeständigkeit soll hoch sein, so daß auch der Oberflächenglanz erhalten bleibt. Weitere Anforderungen sind eine gute Recyclingfähigkeit und ein schlechtes Brandverhalten sowie eine gute Maßhaltigkeit bei thermischer Belastung bei der Herstellung und Anwendung.

Erfindungsgemäß werden diese Aufgaben gelöst durch Verwendung einer thermoplastischen Formmasse, bestehend aus, bezogen auf die Summe der Mengen der Komponenten A, B, C und gegebenenfalls D, die insgesamt 100 Gew.-% ergibt,

a:  1 - 48 Gew.-% mindestens eines mehrphasigen teilchenförmigen Emulsionspolymerisats mit einer Glasübergangstemperatur unterhalb von 0°C in mindestens einer Phase und einer mittleren Teilchengröße von 50 - 1000 nm,

aus

a1:  1 - 99 Gew.-% einer teilchenförmigen ersten Phase A1 mit einer Glasübergangstemperatur unterhalb von 0°C, aus den Monomeren

a11: 80 - 99,99 Gew.-% eines $C_{1-8}$-Alkylesters der Acrylsäure als Komponente A11,

a12: 0,01 - 20 Gew.-% mindestens eines polyfunktionellen vernetzenden Monomeren als Komponente A12,

a2:  1 - 99 Gew.-% einer zweiten Phase A2 aus den Monomeren, bezogen auf A2,

a21:  40 - 100 Gew.-% Einheiten eines vinylaromatischen Monomeren als Komponente A21 und

a22:  0 bis 60 Gew.-% Einheiten eines ethylenisch ungesättigten Monomeren als Komponente A22,

a3:  0 bis 50 Gew.-% einer dritten Phase mit einer Glasübergangs temperatur von mehr als 0°C als Komponente A3, wobei die Gesamtmenge der Komponenten A1, A2 und A3 100 Gew.-% ergibt. als Komponente A,

b:  1 - 48 Gew.-% mindestens eines amorphen oder teilkristallinen Polymerisats aus 40 - 100 Gew.-% Styrol und/oder α-Methylstyrol und 0 - 60 Gew.-% Acrylnitril als Komponente B,

c:  51 - 98 Gew.-% Polycarbonate als Komponente C, und

d:  0 - 47 Gew.-% übliche Additive, und/oder faser- oder teilchenförmige Zusatzstoffe oder deren Gemische als Komponente D

zur Herstellung von Gehäusen und Abdeckungen und deren Halbzeuge für Filter, Pumpen und Motoren.

Angegebene Glasübergangstemperaturen von Phasen beziehen sich auf ein Polymer mit der Zusammensetzung entsprechend dieser Phase.

Die beschriebenen Gehäuse und Abdeckungen für Filter, Pumpen und Motoren sind kratzfest, stabil und chemikalienbeständig. Sie weisen zudem eine sehr gute Vergilbungsbeständigkeit und Farbtiefe auf.

Die Komponenten der zur Herstellung der erfindungsgemäßen Gehäuse und Abdeckungen für Filter, Pumpen und Motoren erfindungsgemäß verwendeten thermoplastischen Formmassen sind an sich bekannt. Beispielsweise sind in DE-A-12 60 135, DE-C-19 11 882, DE-A-28 26 925, DE-A- 31 49 358, DE-A-32 27 555 und DE-A-40 11 162 erfindungsgemäß verwendbare Komponenten und Formmassen beschrieben.

Die zur Herstellung der erfindungsgemäßen Gehäuse und Abdeckungen für Filter, Pumpen und Motoren erfindungsgemäß verwendeten Formmassen bestehen aus, bezogen auf die Summe der Mengen der Komponenten A, B, C und gegebenenfalls D, die insgesamt 100 Gew.-% ergibt,

a:  1 - 48 Gew.-%, vorzugsweise 3 - 35 Gew.-%, insbesondere 5 - 30 Gew.-%, der Komponente A,
b:  1 - 48 Gew.-%, vorzugsweise 5 - 40 Gew.-%, insbesondere 5 - 35 Gew.-%, der Komponente B,
c:  51 - 98 Gew.-%, vorzugsweise 55 - 90 Gew.-%, insbesondere 60 - 85 Gew.-% der Komponente C, und
d:  0 - 47 Gew.-%, vorzugsweise 0 - 37 Gew.-%, insbesondere 0 - 30 Gew.-% der Komponente D.

Im folgenden wird die Erfindung näher erläutert.

Zunächst werden die zur Herstellung der erfindungsgemäßen Gehäuse und Abdeckungen für Filter, Pumpen und Motoren verwendeten Formmassen beschrieben und die Komponenten, aus denen diese aufgebaut sind.

## KOMPONENTE A

Komponente A ist mindestens ein ein- oder mehrphasiges teilchenförmiges Emulsionspolymerisat mit einer Glasübergangstemperatur unterhalb von 0°C in mindestens einer Phase und einer mittleren Teilchengröße von 50 - 1000 nm.

Es handelt es sich bei Komponente A um ein mehrphasiges Polymerisat aus

a1: 1 - 99 Gew.-%, vorzugsweise 15 - 80 Gew.-%, insbesondere 40 -65 Gew.-%, einer teilchenförmigen ersten Phase A1 mit einer Glasübergangstemperatur unterhalb von 0°C,

a2: 1 - 99 Gew.-%, vorzugsweise 20 - 85 Gew.-%, insbesondere 35 -60 Gew.-%, einer zweiten Phase A2 aus den Monomeren, bezogen auf A2,

a21: 40 - 100 Gew.-%, vorzugsweise 65 - 85 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente A21 und

a22: 0 bis 60 Gew.-%, vorzugsweise 15 - 35 Gew.-%, Einheiten eines ethylenisch ungesättigten Monomeren, vorzugsweise des Acrylnitrils oder Methacrylnitrils, insbesondere des Acrylnitrils als Komponente A22.

a3: 0 bis 50 Gew.-% einer dritten Phase mit einer Glasübergangstemperatur von mehr als 0°C als Komponente A3, wobei die Gesamtmenge der Komponenten A1, A2 und A3 100 Gew.-% ergibt.

Dabei können die Phasen nach Art einer Pfropfcopolymerisation miteinander verbunden werden. Hierbei kann beispielsweise die erste Phase A1 die Pfropfgrundlage bilden und die zweite Phase A2 eine Pfropfauflage. Es können mehrere Phasen vorgesehen werden, entsprechend einem Pfropfcopolymer mit einer Pfropfgrundlage und mehreren Pfropfauflagen. Die Pfropfauflage muß dabei jedoch nicht notwendigerweise in Form einer Hülle um den Pfropfkern vorliegen. Es sind unterschiedliche Geometrien möglich, beispielsweise kann ein Teil der ersten Phase A1 mit der zweiten Phase A2 bedeckt sein, es können sich interpenetrierende Netzwerke bilden usw. Die erste Phase A1 besitzt besonders bevorzugt eine Glasübergangstemperatur unterhalb von -10°C, insbesondere unterhalb von -15°C. Die dritte Phase weist vorzugsweise eine Glasübergangstemperatur von mehr als 60°C auf. Diese dritte Phase kann beispielsweise zu 1 - 50 Gew.-%, insbesondere 5-40 Gew.-%, bezogen auf die Komponente A, vorliegen.

Im folgenden kann anstelle von "erster Phase" auch "Pfropfgrundlage" verstanden werden, entsprechend "Pfropfauflage" anstelle von "zweiter Phase".

Die dritte Phase kann vorzugsweise aus mehr als 50 Gew.-% Styrol, insbesondere aus mehr als 80 Gew.-% Syrol, bezogen auf die Gesamtzahl der Monomere der dritten Phase, aufgebaut sein.

Komponente A1 besteht aus den Monomeren

a11: 80 - 99,99 Gew.-%, vorzugsweise 95 - 99,9 Gew.-%, eines $C_{1-8}$-Alkylesters der Acrylsäure, vorzugsweise n-Butylacrylat und/oder Ethylhexylacrylat als Komponente A11,

a12: 0,01 - 20 Gew.-%, vorzugsweise 0,1 - 5,0 Gew.-%, mindestens eines polyfunktionellen vernetzenden Monomeren als Komponente A12.

Die mittlere Teilchengröße der Komponente A beträgt 50 - 1000 nm, vorzugsweise 50 - 800 nm.

Gemäß einer weiteren erfindungsgemäßen Ausführungsform ist die Teilchengrößenverteilung der Komponente A bimodal, wobei 1 - 99, vorzugsweise 20 - 95, insbesondere 45 - 90 Gew.-% eine mittlere Teilchengröße von 50 - 200 nm und 1-99, vorzugsweise 5 - 80, insbesondere 10 - 55 Gew.-% eine mittlere Teilchengröße von 200 - 1000 nm aufweisen, bezogen auf das Gesamtgewicht der Komponente A.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Die Glasübergangstemperatur des Emulsionspolymerisats A wie auch der anderen erfindungsgemäß verwendeten Komponenten wird mittels DSC (Differential Scanning Calorimetry) nach ASTM 3418 (mid point temperature) bestimmt.

Bei den Acrylatkautschuken handelt es sich um Alkylacrylat-Kautschuke aus einem oder mehreren $C_{1-8}$-Alkylacrylaten, vorzugsweise $C_{4-8}$-Alkylacrylaten, wobei bevorzugt mindestens teilweise Butyl-, Hexyl-, Octyl- oder 2-Ethylhexylacrylat, insbesondere n-Butyl- und 2-Ethylhexylacrylat, verwendet wird.

Die Acrylatkautschuke enthalten weiterhin 0,01 - 20 Gew.-%, vorzugsweise 0,1 - 5 Gew.-%, an vernetzend wirkenden, polyfunktionellen Monomeren (Vemetzungsmonomere). Beispiele hierfür sind Monomere, die 2 oder mehr zur Copolymerisation befähigte Doppelbindungen enthalten, die vorzugsweise nicht in den 1,3-Stellungen konjugiert sind.

Geeignete Vernetzungsmonomere sind beispielsweise Ethylenglykoldi(meth)acrylat, Butandiol-, oder Hexandioldi(meth)acrylat, Divinylbenzol, Diallylmaleat, Diallylfumarat, Diallylphthalat, Triallylcyanurat, Triallylisocyanurat, Tricyclodecenylacrylat, Dihydrodicyclopentadienylacrylat, Triallylphosphat, Allylacrylat, Allylmethacrylat oder Dicyclopentadienylacrylat (DCPA) (vgl. DE-C-12 60 135).

## Kern/Schale - Emulsionspolymerisat A

Bei dem Emulsionspolymerisat A handelt es sich auch um ein mehrstufig aufgebautes Polymerisat (sog. "Kern/Schale-Aufbau", "core-shell morphology").

In einer besonders bevorzugten Ausgestaltung der Erfindung handelt es sich bei der Komponente A um ein Pfropfcopolymerisat. Die Pfropfcopolymerisate A der erfindungsgemäßen Formmassen haben dabei eine mittlere Teilchengröße $d_{50}$ von 50-1000 nm, bevorzugt von 50 - 800 nm.

Das Pfropfcopolymerisat A ist mehrstufig, d.h. ein aus einem Kern und einer oder mehreren Hüllen aufgebautes Polymerisat. Das Polymerisat besteht aus einer Grundstufe (Pfropfkem) A1 und einer oder mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A-36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C, vorzugsweise oberhalb von 50°C haben. Die äußere Propfhülle dient u.a. dazu, eine (Teil-)Verträglichkeit der Kautschukteilchen A mit dem Thermoplasten B zu erzielen.

Pfropfcopolymerisate A werden beispielsweise hergestellt durch Pfropfung von mindestens einem der im folgenden aufgeführten Monomeren A2 auf mindestens eine der vorstehend aufgeführten Pfropfgrundlagen bzw. Pfropfkemmaterialien A1. Als Pfropfgrundlagen A1 der erfindungsgemäßen Formmassen sind alle Polymerisate geeignet, die oben unter den Emulsionspolymerisaten A beschrieben sind.

Gemäß einer Ausführungsform der Erfindung ist die Pfropfgrundlage A1 aus 15-99,9 Gew.-% Acrylatkautschuk und 0,1 - 5 Gew.-% Vernetzer zusammengesetzt.

Geeignete Monomere zur Bildung der Pfropfauflage A2 können beispielsweise aus den im folgenden aufgeführten Monomeren und deren Gemischen ausgewählt sein:

Vinylaromatische Monomere, wie Styrol und seine substituierten Derivate, wie α-Methylstyrol, p-Methylstyrol, 3,4-Dimethylstyrol, p-tert.-Butylstyrol und p-Methyl-α-methylstyrol oder $C_1-C_8$-Alkyl(meth)acrylate wie Methylmethacrylat, Ethylmethacrylat, Methylacrylat, Ethylacrylat, n-Butylacrylat, i-Butylacrylat; bevorzugt sind Styrol, α-Methylstyrol, Methylmethacrylat, insbesondere Styrol und/oder α-Methylstyrol, und ethylenisch ungesättigte Monomeren, wie Acryl- und Methacrylverbindungen, wie Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimide, z.B. Alkyl- und Arylmaleinimide, wie Methyl-, Cyclohexyl-, oder Phenylmaleinimid. Bevorzugt sind Methacrylate, Acrylnitril und Methacrylnitril, insbesondere Acrylnitril.

Weiterhin können als (Co-) Monomere Styrol-, Vinyl-, Acryl- oder Methacrylverbindungen (z.B. Styrol, wahlweise substituiert mit $C_{1-12}$-Alkylresten, Halogenatomen, Halogenmethylenresten; Vinylnaphthalin, Vinylcarbazol; Vinylether mit $C_{1-12}$-Etherresten; Vinylimidazol, 3-(4-)Vinylpyridin, Dimethylaminoethyl(meth)acrylat, p-Dimethylaminostyrol, Acrylnitril, Methacrylnitril, Acrylsäure, Methacrylsäure, Acrylsäurebutylester, Acrylsäureethylhexylester und Methylmethacrylat sowie Fumarsäure, Maleinsäure, Itaconsäure oder deren Anhydride, Amide, Nitrile oder Ester mit 1 bis 22 C-Atome, vorzugsweise 1 bis 10 C-Atome enthaltenden Alkoholen) verwendet werden.

Gemäß einer Ausführungsform der Erfindung umfaßt Komponente A 50 bis 100 Gew.-%, vorzugsweise 50 -90 Gew.-% der vorstehend beschriebenen ersten Phase (Pfropfgrundlage) A1 und 0 bis 50 Gew.-%, vorzugsweise 10 - 50 Gew.-% der vorstehend beschriebenen zweiten Phase (Pfropfauflage) A2, bezogen auf das Gesamtgewicht der Komponente A. Als dritte Phase kommen insbesondere StyrolCopolymere in Betracht.

Als Pfropfgrundlage A1 dienen vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus einer oder mehreren Pfropfhüllen, deren äußerste Pfropfhülle davon hat eine Glasübergangstemperatur von mehr als 30°C hat, wobei ein aus den Monomeren der Pfropfauflage A2 gebildetes Polymer eine Glasübergangstemperatur von mehr als 80°C aufweisen würde.

Bezüglich der Messung der Glasübergangstemperatur und der mittleren Teilchengröße sowie der Q-Werte gilt für die Pfropfcopolymerisate A das für die Emulsionspolymerisate A Gesagte.

Die Pfropfcopolymerisate A können auch durch Pfropfung von vorgebildeten Polymeren auf geeignete Pfropfhomopolymerisate hergestellt werden. Beispiele dafür sind die Umsetzungsprodukte von Maleinsäureanhydrid- oder Säuregruppen enthaltenden Copolymeren mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt, insbesondere in Gegenwart von Latices der Komponente A1 bei Temperaturen von 20°C - 90°C unter Verwendung wasserlöslicher oder öllöslicher Initiatoren wie Peroxodisulfat oder Benzoylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A- 28 26 925, 31 49 358 und in der DE-C-12 60 135.

Der Aufbau der Pfropfhüllen erfolgt vorzugsweise im Emulsionspolymerisationsverfahren, wie es beschrieben ist in DE-A-32 27 555, 31 49 357, 31 49 358, 34 14 118. Das definierte Einstellen der erfindungsgemäßen Teilchengrößen von 50 - 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise aus DE-A-28 26 925 und US 5,196,480 bekannt.

Gemäß dem in der DE-C-12 60 135 beschriebenen Verfahren wird zunächst die Pfropfgrundlage A1 hergestellt, indem der oder die gemäß einer Ausführungsform der Erfindung verwendeten Acrylsäureester und das mehrfunktionelle, die Vernetzung bewirkende Monomere, ggf. zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 - 5 Gew.-%, insbesondere von 1 - 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 - 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres $\alpha$-Methylstyrol, bei der Polymerisation verwendet werden.

Zur Herstellung des Pfropfpolymerisats A wird sodann in einem nächsten Schritt in Gegenwart des so erhaltenen Latex des vernetzten Acrylsäureester-Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 - 99 Gew.-%, vorzugsweise 20 - 85 Gew.-%, insbesondere 35 - 60 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen einige Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

In einer besonderen Ausführungsform haben sich bimodale Teilchengrößenverteilungen der Komponente A als besonders vorteilhaft erwiesen. Diese lassen sich erzeugen durch Mischen von getrennt hergestellten Teilchen unterschiedlicher Größe, die zudem noch unterschiedlich in ihrer Zusammensetzung und in ihrem Schalenaufbau sein können (Kern/Schale, Kern/Schale/Schale etc.), oder aber man erzeugt eine bimodale Teilchengrößenverteilung durch partielle Agglomerisation vor, während oder nach der Pfropfung.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 1 - 99 Gew.-%, bevorzugt 15 - 80 und besonders bevorzugt 40 - 65 Gew.-% erste Phase (Pfropfgrundlage) A1 und 1 - 99 Gew.-%, bevorzugt 20 - 85, besonders bevorzugt 35 - 60 Gew.-% der zweiten Phase (Pfropfauflage) A2, jeweils bezogen auf das gesamte Pfropfcopolymerisat.


**KOMPONENTE B**

Komponente B ist ein amorphes oder teilkristallines Polymerisat aus

40 - 100 Gew.-%, vorzugsweise 60 - 85 Gew.-%, Einheiten des Styrols und/oder $\alpha$-Methylstyrols
0 bis 60 Gew.-%, vorzugsweise 15 - 40 Gew.-%, Einheiten des Acrylnitrils.

Gemäß einer bevorzugten Ausführungsform der Erfindung beträgt die Viskositätszahl der Komponente B 50 - 120, vorzugsweise 55 - 100.

Vorzugeweise wird als Komponente B ein amorphes Copolymerisat von Styrol und/- oder α-Methylstyrol mit Acrylnitril verwendet. Der Acrylnitrilgehalt in diesen Copolymerisaten der Komponente B beträgt dabei 0 - 60 Gew.-%, vorzugsweise 15 - 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/ Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich um ein Styrol/Acrylnitril-Copolymerisat, ein α-Methylstyrol/-Acrylnitril-Copolymerisat oder ein α-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B der erfindungsgemäß verwendeten Formmassen beispielsweise um ein Gemisch aus einem Styrol/Acrylnitril-Copolymerisat und einem α-Methylstyrol/Acrylnitril-Copolymerisat handeln kann. In dem Fall, in dem die Komponente B der erfindungsgemäß verwendeten Formmassen aus einem Gemisch aus einem Styrol/Acrylnitril-Copolymerisat und einem α-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B der erfindungsgemäß verwendeten Formmassen kann jedoch auch nur aus einem einzigen Styrol/-Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder α-Methylstyrols mit dem Acrylnitril in Masse, Lösung, Suspension oder wäßriger Emulsion durchgeführt werden. Die Komponente B hat vorzugsweise eine Viskositätszahl von 40 bis 120, bevorzugt 50 bis 120, insbesondere 55 bis 100. Die Bestimmung des Viskositätszahl erfolgt dabei nach DIN 53 726, dabei werden 0,5 g Material in 100 ml Dimethylformamid gelöst.

Das Mischen der Komponenten A und B kann nach jeder beliebigen Weise nach allen bekannten Methoden erfolgen. Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten A und B durch gemeinsames Extrudieren, Kneten oder Verwalzen der Komponenten, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

**KOMPONENTE C**

Geeignete Polycarbonate C sind an sich bekannt. Sie haben vorzugsweise ein Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von 51 - 98 Gew.-%, bevorzugt von 55 - 90 Gew.-%, insbesondere 60 - 85 Gew.-% jeweils bezogen auf die gesamte Formmasse, vor.

Der Zusatz von Polycarbonaten führt gemäß einer Ausführungsform der Erfindung unter anderem zu höherer Thermostabilität und verbesserter Rißbeständigkeit der zur Herstellung der erfindungsgemäßen Gehäuse und Abdeckungen für Filter, Pumpen und Motoren erfindungsgemäß verwendeten Formmassen.

## KOMPONENTE D

Als Komponente D enthalten die zur Herstellung der erfindungsgemäßen Gehäuse und Abdeckungen für Filter, Pumpen und Motoren erfindungsgemäß verwendeten bevorzugten thermoplastischen Formmassen 0 - 50 Gew.-%, vorzugsweise 0 - 37 Gew.-%, insbesondere 0 - 30 Gew.-% faser- oder teilchenförmige Zusatzstoffe und sonstige Additive oder deren Mischungen, jeweils bezogen auf die gesamte Formmasse. Dabei handelt es sich vorzugsweise um kommerziell erhältliche Produkte.

Verstärkungsmittet wie Kohlenstoffasem und Glasfasern werden üblicherweise in Mengen von 5 - 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 $\mu$m. Es können sowohl Endlosfasern (rovings) als auch Schnittglasfasern (staple) eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken von Fa. Transmet Corp.), Metallpulver, Metallfasern, metallbeschichtete Füllstoffe, z.B. nickelbeschichtete Glasfasern sowie andere Zuschlagstoffe, die elektromagnetische Wellen abschirmen, den zur Herstellung der erfindungsgemäßen Gehäuse erfindungsgemäß verwendeten Formmassen beigemischt werden. Insbesondere kommen Aluminiumflocken (K 102 von Transmet) für EMI-Zwecke (<u>e</u>lectro<u>m</u>agnetic <u>i</u>nterference) in Betracht. Ferner können die Massen mit zusätzlichen Kohlenstoffasern, Ruß, insbesondere Leitfähigkeitsruß, oder nickelbeschichteten C-Fasern vermischt werden.

Die zur Herstellung der erfindungsgemäßen Gehäuse und Abdeckungen für Filter, Pumpen und Motoren erfindungsgemäß verwendeten Formmassen können ferner weitere Zusatzstoffe D enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Puffersubstanzen, Flammschutzmittel, Abtropfinhibitoren, Umesterungsinhibitoren, Mittel gegen die Wärmezersetzung und insbesondere die Schmier-/Gleitmittel und Wachse, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Weitere geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebazat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 -1 Gew.-%.

Auch Siliconöle, oligomeres Isobutylen oder ähnliche Stoffe kommen als Zusatzstoffe in Frage, die üblichen Mengen betragen 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Femer können handelsübliche halogenfreie oder halogenhaltige Flammschutzmittel in üblichen Mengen beispielsweise bis 20 Gew.-% eingesetzt werden. Beispiele für halogenfreie Flammenschutzmittel sind in EP-A-0 149 813 beschrieben. Ansonsten sei auf DE-A-34 36 815 verwiesen, wobei mit einem Molekulargewicht von 40 000 bevorzugt wird.

Verarbeitungshilfsmittel und Stabilisatoren wie UV-Stabilisatoren, Schmiermittel und Antistatika werden üblicherweise in Mengen von 0,01 - 5 Gew.-% verwendet, bezogen auf die gesamte Formmasse.

Die Herstellung der zur Herstellung der erfindungsgemäßen Gehäuse und Abdeckungen für Filter, Pumpen und Motoren erfindungsgemäß verwendeten thermoplastischen Formmassen kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen durch gemeinsames Extrudieren, Kneten oder Verwalzen der Komponenten A - D, bevorzugt bei Temperaturen von 180 - 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Die erfindungsgemäßen Gehäuse und Abdeckungen für Filter, Pumpen und Motoren können gemäß einer Ausführungsform der Erfindung nach den bekannten Verfahren der Thermoplastverarbeitung aus den erfindungsgemäß verwendeten thermoplastischen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen. Speziell beim Kalandrieren und Tiefziehen werden als Zwischenstufe Platten und Folien erzeugt bzw. eingesetzt.

Die Gehäuse und Abdeckungen sowie deren Halbzeuge für Filter, Pumpen und Motoren können aus den unterschiedlichsten Einsatzgebieten stammen. Die Pumpen und Filter können aus den verschiedensten Zweigen der produzierenden und verarbeitenden Industrie stammen. Beispielsweise können Kaltwasser, wässrige Lösungen oder Emulsionen, Gase in Garten- und Landwirtschaftsbereichen, Lebensmittel wie Milch und Wein durch die Pumpen und Filter geführt werden. Sie können neben dem Einsatz in der Industrie und Landwirtschaft sowie dem Lebensmittelbereich auch im medizinischen Bereich eingesetzt werden. Beispiele derartiger Geräte sind Dialyse-, Infusions-, und Diagnosegeräte. Auch der Einsatz in Laborgeräten wie Laborpumpen und analytischen Geräten ist möglich. Dem Fachmann sind eine Vielzahl geeigneter Anwendungen bekannt.

Die Abdeckungen der Pumpenmotoren wie auch anderer Motoren, beispielsweise in Kraftfahrzeugen, Motorsägen und anderen Handwerksgeräten, werden auch vorteilhaft mit den erfindungsgemäßen Formmassen ausgeführt. Allgemein sind eine Vielzahl von Anwendungen im Maschinenbaubereich möglich. Auch Halbzeuge, Platten, Folien usw. für diesen Einsatzzweck können aus den Formmassen aufgebaut sein.

Insbesondere dienen die Pumpen und Filter der Verarbeitung und dem Transport von fluiden Medien wie Flüssigkeiten und Gasen. Dabei sind wäßrige oder alkoholische Flüssigkeiten und Gase wie Luft, Sauerstoff oder Inertgase wie Stickstoff und Argon bevorzugt.

Die Gehäuse und Abdeckungen weisen eine sehr gute Chemikalienbeständigkeit auf, was die Reinigung deutlich vereinfacht. Zudem sind sie kratzfest, was ebenfalls bei der Reinigung von großem Vorteil ist.

Zudem sind die erfindungsgemäßen Gehäuse und Abdeckungen für Filter, Pumpen und Motoren vergilbungsbeständig und sehr stabil. Sie weisen ein ausgewogenes Verhältnis von Zähigkeit und Biegesteifigkeit auf.

Durch den hohen Gehalt an Polycarbonaten in den Formmassen sind die Gehäuse und Abdeckungen für Fiter, Pumpen und Motoren sehr wärmeformbeständig und widerstandsfähig gegen anhaltende Wärme. Durch Zusatz des Polycarbonats als Komponente C werden dabei die Wärmeformbeständigkeit und Schlagzähigkeit der Gehäuse und Abdeckungen für Filter, Pumpen und Motoren weiter verbessert. Diese Gehäuse und Abdeckungen für Filter, Pumpen und Motoren weisen zudem eine gute Dimensionsstabilität sowie eine hervorragende Widerstandsfähigkeit gegen Wärmealterung und eine hohe Vergilbungsbeständigkeit bei thermischer Belastung und Einwirkung von UV-Strahlung auf.

Die Gehäuse und Abdeckungen für Filter, Pumpen und Motoren weisen hervorragende Oberflächenbeschaffenheiten auf, die auch ohne weitere Oberflächenbehandlung erhalten werden. Durch geeignete Modifizierung der Kautschukmorphologie kann das Erscheinungsbild der fertigen Oberflächen der Gehäuse und Abdeckungen für Filter, Pumpen und Motoren modifiziert werden, beispielsweise um glänzende oder matte Oberflächengestaltungen zu erreichen. Die Gehäuse und Abdeckungen für Filter, Pumpen und Motoren zeigen bei Einwirkung von Witterung und UV-Bestrahlung einen sehr geringen Vergrauungs- bzw. Vergilbungseffekt, so daß die Oberflächeneigenschaften erhalten bleiben. Weitere vorteilhafte Eigenschaften der Gehäuse und Abdeckungen für Filter, Pumpen und Motoren sind die hohe Witterungsstabilität, gute thermische Beständigkeit, hohe Vergilbungsbeständigkeit bei UV-Bestrahlung und thermischer Belastung, gute Spannungsrißbeständigkeit, insbesondere bei Einwirkung von Chemikalien, und ein gutes antielektrostatisches Verhalten. Zudem weisen sie eine hohe Farbstabilität auf, beispielsweise auch infolge der hervorragenden Beständigkeit gegen Vergilben und Verspröden. Die erfindungsgemäßen Gehäuse und Abdeckungen für Filter, Pumpen und Motoren aus den erfindungsgemäß verwendeten thermoplastischen Formmassen zeigen sowohl bei tiefen Temperaturen wie auch nach längerer Wärmeeinwirkung keinen signifikanten Verlust an Zähigkeit bzw. Schlagzähigkeit, die auch bei der Belastung durch UV-Strahlen erhalten bleibt. Auch die Zugfestigkeit bleibt erhalten. Weiterhin zeigen die erfindungsgemäßen Formmassen bzw. Gehäuse und Abdeckungen für Filter, Pumpen und Motoren daraus hohe Beständigkeit gegen Zerkratzen, eine hohe Beständigkeit gegen Quellung sowie eine geringe Permeabilität gegenüber Flüssigkeiten und Gasen, wie auch eine gute Brandwidrigkeit.

Es ist möglich, zur Herstellung der erfindungsgemäßen Gehäuse und Abdeckungen fiir Filter, Pumpen und Motoren gemäß der vorliegenden Erfindung bereits verwendete thermoplastische Formmassen wiederzuverwerten. Aufgrund der hohen Farbstabilität, Witterungsbeständigkeit und Alterungsbeständigkeit sind die erfindungsgemäß verwendeten Formmassen sehr gut geeignet für die Wiederverwendung. Dabei kann der Anteil an wiederverwendeter (recyclierter) Formmasse hoch sein. Bei Verwendung von beispielsweise 30 Gew.-% bereits verwendeter Formmasse, die in gemahlener Form den erfindungsgemäß verwendeten Formmassen beigemischt wurde, änderten sich die relevanten Materialeigeschaften wie Fließfähigkeit, Vicat-Erweichungstemperatur und Schlagzähigkeit der Formmassen und der daraus hergestellten erfindungsgemäßen Gehäuse und Abdeckungen für Filter, Pumpen und Motoren nicht signifikant. Ähnliche Ergebnisse wurden bei der Untersuchung der Witterungsbeständigkeit erhalten. Die Schlagzähigkeit war auch bei Verwendung von wiederverwerteten thermoplastischen Formmassen über lange Zeit konstant, siehe Lindenschmidt, Ruppmich, Hoven-Nievelstein, International Body Engineering Conference, 21. - 23. September 1993, Detroit, Michigan, USA, Interior and Exterior Systems, Seiten 61 bis 64. Auch die Vergilbungsbeständigkeit blieb erhalten.

Die Erfindung wird anhand der nachfolgenden Beispiele näher erläutert.

BEISPIELE

Beispiel 1

*Herstellung von kleinteiligem Pfropfcopolymerisat (A)*

(a1) 16 Teile Butylacrylat und 0,4 Teile Tricyclodecenylacrylat wurden in 150 Teilen Wasser unter Zusatz von einem Teil des Natriumsalzes einer $C_{12}$- bis $C_{18}$-Paraffinsulfonsäure, 0,3 Teilen Kaliumper-sulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurde innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).

(a2) 150 Teile des nach (a1) erhaltenen Polybutylacrylat-Latex wurden mit 40 Teilen einer Mischung aus Styrol und Acrylnitril (Gewichtsverhältnis 75 : 25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%.

Beispiel 2

*Herstellung von großteiligem Pfropfcopolymerisat (A)*

(a1) Zu einer Vorlage aus 2,5 Teilen des in der Stufe (a1) aus Beispiel 1 hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel des Latex) wurde zu 288 nm ermittelt. Die Teilchengrößenverteilung war eng (Q = 0,1).

(a2) 150 Teile dieses Latex wurden mit 40 Teilen einer Mischung aus Styrol und Acrylnitril (Verhältnis 75 : 25) und 110 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Das bei der Pfropfmischpolymerisation erhaltene Polymerisationsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 27% ermittelt.

Beispiel 3

*Herstellung von großteiligem Pfropfcopolymerisat (A)*

(a1)     16 Teile Butylacrylat und 0,4 Teile Tricyclodecenylacrylat wurden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 216 nm ermittelt. Die Teilchengrößenverteilung war eng (Q = 0,29).

(a2) 150 Teile des nach (a1) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Nach Beendigung der ersten Stufe der Pfropfmischpolymerisation hatte das Pfropfmischpolymerisat einen Pfropfgrad von 17%. Diese Pfropfmischpolymerisatdispersion wurde ohne weitere Zusatzstoffe mit 20 Teilen einer Mischung aus Styrol und Acrylnitril (Verhältnis 75 : 25) weitere 3 Stunden polymerisiert. Nach Beendigung der Pfropfmischpolymerisation wurde das Produkt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%, die mittlere Teilchengröße der Latexteilchen wurde zu 238 nm ermittelt.

Beispiel 4

*Herstellung von großteiligem Pfropfcopolymerisat (A)*

(a1) Zu einer Vorlage aus 2,5 Teilen des in Beispiel 3 (Komponente A) hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengröße (Gewichtsmittel) des Latex wurde zu 410 nm ermittelt. Die Teilchengrößenverteilung war eng (Q=0,1).

(a2) 150 Teile des nach (a1) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75 : 25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35% ermittelt, die mittlere Teilchengröße der Latexteilchen betrug 490 nm.

Beispiel 5

*Herstellung von großteiligem Pfropfcopolymerisat (A)*

(a1) 98 Teile Acrylsäurebutylester und 2 Teile Tricyclodecenylacrylat wurden in 154 Teilen Wasser unter Zusatz von 2 Teilen Dioctylsulfosuccinatnatrium (70%ig) als Emulgator und 0,5 Teilen Kaliumpersulfat unter Rühren 3 Stunden bei 65°C polymerisiert. Man erhielt eine etwa 40%ige Dispersion. Die mittlere Teilchengröße des Latex war etwa 100 nm.

Zu einer Vorlage aus 2,5 Teilen dieses Latex, 400 Teilen Wasser sowie 0,5 Teilen Kaliumpersulfat wurde bei 65°C eine Mischung von 49 Teilen Acrylsäurebutylester, 1 Teil Tricyclodecenylacrylat und 0,38 Teilen des Emulgators innerhalb von 1 Stunde zugegeben. Im Verlauf einer weiteren Stunde fügte man eine Mischung von 49 Teilen Acrylsäurebutylester, 1 Teil Tricyclodecenylacrylat und 0,76 Teilen Emulgator zu. Nach Zugabe von 1 Teil Kaliumpersulfat in 40 Teilen Wasser wurde schließlich innerhalb von 2 Stunden eine Mischung aus 196 Teilen Acrylsäurebutylester, 4 Teilen Tricyclodecenylacrylat sowie 1,52 Teilen des Emulgators zugetropft. Die Polymerisatmischung wurde anschließend noch 2 Stunden bei 65°C nachpolymerisiert. Man erhielt eine etwa 40%ige Dispersion mit einem mittleren Teilchendurchmesser von etwa 500 nm.

Gab man statt insgesamt 300 Teilen an Monomeren nur 100 Teile zu, so erhielt man einen Latex mit einem mittleren Teilchendurchmesser von etwa 300 nm.

(a2) 465 Teile Styrol und 200 Teile Acrylnitril wurden in Gegenwart von 2500 Teilen des Polymerisatlatex nach (a1) mit der mittleren Teilchengröße 0,1 bzw. 0,3 bzw. 0,5 µm, 2 Teilen Kaliumsulfat, 1,33 Teilen Laurylperoxid und 1005 Teilen Wasser unter Rühren bei 60°C polymerisiert. Man erhielt eine 40%ige Dispersion, aus der das Festprodukt durch Zusatz einer 0,5%igen Calciumchloridlösung ausgefällt, mit Wasser gewaschen und getrocknet wurde.

Beispiel 6

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 80 ml/g.

Beispiel 7

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-%, bezogen auf das Copolymerisat, und eine Viskositätszahl von 60 ml/g.

Beispiel 8

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 27 Gew.-%, bezogen auf das Copolymerisat, und eine Viskositätszahl von 80 ml/g.

Vergleichsbeispiel 1

*ABS-Polymerisat*

Als Vergleichspolymerisat wurde ein Polybutadien-Kautschuk verwendet, der gepfropft war mit einem Styrol-Acrylnitril-Copolymer als Komponente (A), die in einer Styrol-Acrylnitril-Copolymer-Matrix als Komponente (B) vorlag. Der Gehalt an Pfropfkautschuk betrug 30 Gew.-%, bezogen auf das Gesamtgewicht des fertigen Polymerisats.

Beispiel 9

*Komponente C*

Als Komponente C wurde ein übliches Polycarbonat (PC) verwendet, das eine Viskositätszahl von 61,5 ml/g aufwies, bestimmt im Lösungsmittel Methylenchlorid. Entsprechend den Angaben in der nachstehenden Tabelle 1 werden die angegebenen Mengen der entsprechenden Polymerisate (A), (B) und (C) bzw. der Vergleichsmassen in einem Schneckenextruder bei einer Temperatur von 200°C-230°C gemischt. Aus den dadurch gebildeten Formmassen wurden Formkörper hergestellt.

Die Zusammensetzung der Formmassen ist in der nachstehenden Tabelle dargestellt:

Tabelle I

| Formmasse | Komponente aus Beispiel | Anteil Gew.-% |
|---|---|---|
| I | A: 1 | 5 |
|  | A: 2 | 5 |
|  | B: 6 | 30 |
|  | C: 9 | 60 |
| II | A: 1 | 5 |
|  | A: 2 | 5 |
|  | B: 6 | 20 |
|  | C: 9 | 70 |
| III | A: 1 | 11 |
|  | A: 2 | 8 |
|  | B: 6 | 26 |
|  | C: 9 | 55 |
| Vergl. I | ABS: Vergl. 1 | 40 |
|  | C: 9 | 60 |
| Vergl. II | A: 1 | 10 |
|  | A: 2 | 10 |
|  | B: 6 | 45 |
|  | C: 9 | 35 |
| Vergl. III | A: 1 | 5 |
|  | A: 2 | 5 |
|  | B: 6 | 45 |
|  | C: 9 | 45 |
| Vergl. IV | ABS: Vergl. 1 | 100 |
| Vergl. V | A: 1 | 30 |
|  | B: 6 | 70 |
| Vergl. VI | A: 1 | 25 |
|  | A: 2 | 5 |
|  | B: 6 | 70 |
| Vergl. VII | A: 1 | 14 |
|  | A: 2 | 10 |
|  | B: 6 | 31 |
|  | C: 9 | 45 |

Untersuchungsergebnisse:

a: Kratzfestigkeit

Die Kratzfestigkeit wird mit einem CSEM Automatic Scratch Tester-Modell AMI (Hersteller: Center Suisse d'Electronique et de Microtechnique S.A.) bestimmt. Der Scratchtester besitzt eine Diamantspitze mit 120° Spitzenwinkel und 0,2 mm Radius. Mit dieser Diamantspitze werden in spritzgegossene Probekörper aus dem zu prüfendem Material Kratzer von 5 mm Länge eingebracht. Die Andruckkraft des Diamanten beträgt, sofern nicht anders angegeben, 2,6 N. Nach einer Stunde Wartezeit werden die enstandenen Kratzer in Querrichtung abgetastet und als Höhen/Tiefen-Profil dargestellt. Daraus kann dann die Kratztiefe abgelesen werden.

b: Spannungsrißbeständigkeit

Die Spannungsrißbeständigkeit wird mit dem Biegestreifenverfahren gemäß ISO 4599 bestimmt. Die verwendeten Probekörper werden dabei spritzgegossen. Sie haben die Maße 80 x 15 x 2 mm. Falls nicht anders angegeben, wurde mit einem Biegeradius der Probekörper von 50 mm gearbeitet. Dazu wurden die Probekörper in eine Schablone eingespannt, gebogen und während 24 h mit dem Prüfmedium benetzt. Danach wird mit einem Schlagpendel die Schlagarbeit bei Bruch bestimmt. Als Prüfmedium wurde in b1 Isopropanol eingesetzt. In b2 wurde ein üblicher Haushaltsreiniger (Ajax Ultra Classic® der Colgate Palmolive Deutschland, ein tensidischer Haushaltsreiniger) verwendet.

c: Quellung

Zur Messung der Quellung werden spritzgegossene Schulterstäbe (Zugstäbe gemäß ISO 3167 mit einer Dicke von 4 mm) während 96 h im zu prüfendem Medium gelagert. Sodann werden sie oberflächlich abgetrocknet, und die Gewichtsveränderung sowie gegebenenfalls die Änderung des Zug-E-Moduls (bestimmt nach ISO 527) werden im Vergleich zum Ausgangswert bestimmt. In Tabelle II, c1 ist die Gewichtsveränderung in Methanol, in c2 in Superbenzin und in c3 die Veränderung des Zug-E-Moduls in Superbenzin dargestellt. d: Permeabilität

Zur Prüfung der Permeabilität werden Folien aus dem zu prüfenden Material gepresst (Dicke etwa 120 bis 250 Pm), deren Durchlässigkeit gegen die angegebenen Gase bzw. Flüssigkeiten bei 23°C bestimmt wird. Dabei werden die Werte in $(cm^3\ 100\ \mu m)/(m^2\ d\ bar)$ bei Gasen bzw. in $(g\ 100\ \mu m)/(m^2\ d)$ bei Wasser angegeben (Tabelle III).

Vorteilhaft einsetzbare Formmassen sollten die folgenden Bedingungen erfüllen: Kratztiefe von weniger als 6 $\mu m$, Veränderung der Schlagarbeit im Vergleich zum Ausgangswert von weniger als 10%, Quellung in Methanol von weniger als 1% bzw. Quellung und Veränderung des E-Moduls von weniger als 6% in Superbenzin.

Die Ergebnisse sind in den nachstehenden Tabellen II und III angegeben.

Tabelle II

| Formmasse | a (in μm) | b1 (in %) | b2 (in %) | c1 (in %) | c2 (in %) | c3 (in %) |
|---|---|---|---|---|---|---|
| I | 3,6 | -8 | - | 0,8 | - | - |
| II | 3,0 | - | -8 | - | 0,4 | -4 |
| III | 5,9 | -6 | - | 0,96 | 5,1 | - |
| Vergl. I | 6,0 | -55 | -34 | - | - | - |
| Vergl. II | 6,2 | -68 | -86 | - | 0,6 | -10 |
| Vergl. III | 5,8 | -35 | -55 | 2 | 0,5 | -8 |
| Vergl. IV | 7,4 | -45 | -20 | 6 | 9 | -28 |
| Vergl. V | 7,2 | -10 | | 7 | - | - |
| Vergl. VI | 6,9 | - | -10 | - | 4 | -26 |
| Vergl. VII | 8,1 | -6 | -42 | 1,2 | 10,2 | - |

EP 1 123 352 B1

Tabelle III

| Formmasse | Stickstoff | Sauerstoff | Wasser |
|---|---|---|---|
| I | 220 | 870 | 24 |
| Vergl. V | 350 | 1200 | 45 |

Zudem wurden an der Formmasse III und der Vergleichsformmasse VII die Quellung bei unterschiedlicher Einwirkungszeit untersucht. Die Ergebnisse sind in der nachstehenden Tabelle IV angegeben:

EP 1 123 352 B1

Tabelle IV

| Quellung (Gewichtsveränderung) in Methanol und Superbenzin | | | | |
|---|---|---|---|---|
| Formmasse: | 1 Tag | 2 Tage | 3 Tage | 4 Tage |
| Methanol: | | | | |
| Vergl. VII | 0,66% | 0,90% | 1,10% | 1,20% |
| III | 0,50% | 0,71% | 0,83% | 0,96% |
| Superbenzin: | | | | |
| Vetgl. VII | 4,70% | 6,80% | 8,40% | 10.20% |
| III | 2,30% | 3,50% | 4,10% | 5,10% |

Weiterhin wurde für die Formmasse III und die Vergleichsformmasse VII das Fogging-Verhalten gemäß VW-PV 3015, Verfahren B (100°C, 16 h) untersucht. Es konnten keine nennenswerten Mengen analysiert werden.

Die Formmassen mit einem Anteil an Polycarbonat von mehr als 50 Gew.-% wiesen eine hervorragende Kombination von Eigenschaften auf. Dieses vorteilhafte Eigenschaftssprektum macht sie insbesondere für die Anwendung in Gehäuse und Abdeckungen für Filter, Pumpen und Motoren geeignet.


**Patentansprüche**

1.  Verwendung einer thermoplastischen Formmasse, bestehend aus, bezogen auf die Summe der Mengen der Komponenten A, B, C und gegebenenfalls D, die insgesamt 100 Gew.-% ergibt,

A.      1 - 48 Gew.-% mindestens eines mehrphasigen teilchenförmigen Emulsionspolymerisats mit einer Glasübergangstemperatur unterhalb von 0°C in mindestens einer Phase und einer mittleren Teilchengröße von 50 - 1000 nm,
aus

a1:      1 - 99 Gew.-% einer teilchenförmigen ersten Phase A1 mit einer Glasübergangstemperatur unterhalb von 0°C, aus den Monomeren

a11: 80 - 99,99 Gew.-% eines $C_{1-8}$-Alkylesters der Acrylsäure als Komponente A11,

a12: 0,01 - 20 Gew.-% mindestens eines polyfunktionellen vernetzenden Monomeren als Komponente A12.

a2:      1 - 99 Gew.-% einer zweiten Phase A2 aus den Monomeren, bezogen auf A2,

a21:      40 - 100 Gew.-% Einheiten eines vinylaromatischen Monomeren als Komponente A21 und

a22:      0 bis 60 Gew.-% Einheiten eines ethylenisch ungesättigten Monomeren als Komponente A22,

a3:      0 bis 50 Gew.-% einer dritten Phase mit einer Glasübergangs temperatur von mehr als 0°C als Komponente A3, wobei die Gesamtmenge der Komponenten A1, A2 und A3 100 Gew.-% ergibt. als Komponente A,

b:      1 - 48 Gew.-% mindestens eines amorphen oder teilkristallinen Polymerisats aus 40 - 100 Gew.-% Styrol und/oder $\alpha$-Methylstyrol und 0 - 60 Gew.-% Acrylnitril als Komponente B,

c:      51 - 98 Gew.-% Polycarbonate als Komponente C, und

d:      0 - 47 Gew.-% übliche Additive, und/oder faser- oder teilchenförmige Zusatzstoffe oder deren Gemische als Komponente D

zur Herstellung von Gehäusen und Abdeckungen und deren Halbzeuge für Filter, Pumpen und Motoren.

**2.** Verwendung nach Anspruch 1, **dadurch gekennzeichnet, daß** die Teilchengrößenverteilung der Komponente A bimodal ist, wobei 1 - 99 Gew.-% eine mittlere Teilchengröße von 50 - 200 nm und 1 - 99 Gew.-% eine mittlere Teilchengröße von 200 - 1000 nm aufweisen, bezogen auf das Gesamtgewicht der Komponente A.

**3.** Verwendung nach einem der Ansprüche 1 oder 2, **dadurch gekennzeichnet, daß** die Gehäuse und Abdeckungen aus den Bereichen der produzierenden und verarbeitenden Industrie, der Landwirtschaft, der Lebensmittelherstellung und-Verarbeitung, dem medizinischen Bereich oder dem Laborbereich stammen.

**4.** Verwendung nach einem der Ansprüche 1 bis 3, **dadurch gekennzeichnet, daß** die Motorabdeckungen aus dem Kraftfahrzeugbereich oder dem Handwerksbereich stammen.

**5.** Gehäuse und Abdeckungen für Filter, Pumpen und Motoren aus einer thermoplastischen Formmasse, wie sie in einem der Ansprüche 1 oder 2 definiert ist.

**6.** Gehäuse und Abdeckungen nach Anspruch 5, **dadurch gekennzeichnet, daß** sie aus dem Bereich der produzierenden und verarbeitenden Industrie, der Landwirtschaft, der Lebensmittelverarbeitung, der Medizin oder der Laborgeräte stammen.

**7.** Verwendung der Formmassen nach einem der Ansprüche 1 oder 2 zur Herstellung von Halbzeugen, Formteilen, Rohren, Profilen, Platten und Folien zur Verwendung in Gehäusen und Abdeckungen für Filter, Pumpen und Motoren.

**Claims**

**1.** The use of a thermoplastic molding composition composed of, based on the total of the amounts of components A, B, C, and, where appropriate, D, this total being 100% by weight,

A: as component A, from 1 to 48% by weight of at least one particulate emulsion polymer which has one or more phases and has a glass transition temperature below 0°C in at least one phase, and has a median particle size from 50 to 1000 nm, made from

a1: from 1 to 99% by weight of a particulate first phase A1 with a glass transition temperature below 0°C, composed of the following monomers

a11: as component A11, from 80 to 99.99% by weight of a $C_1$-$C_8$-alkyl acrylate, and

a12: as component A12, from 0.01 to 20% by weight of at least one polyfunctional crosslinking monomer.

a2: from 1 to 99% by weight of a second phase A2 made from the following monomers, based on A2,

a21: as component A21, from 40 to 100% by weight of units of a vinylaromatic monomer, and

a22: as component A22, from 0 to 60% by weight of units of an ethylenically unsaturated monomer, and

a3: as component A3, from 0 to 50% by weight of a third phase with a glass transition temperature above 0°C, where the total amount of components A1, A2, and A3 is 100% by weight.

b: as component B, from 1 to 48% by weight of at least one amorphous or semicrystalline polymer made from 40-100% by weight of styrene and/or α-methylstyrene and 0-60% by weight of acrylonitrile,

c: as component C, from 51 to 98% by weight of polycarbonates, and

d: as component D, from 0 to 47% by weight of conventional additives and/or fibrous or particulate fillers, or a mixture of these,

# EP 1 123 352 B1

for producing housings or protective coverings, or corresponding semifinished products, for filters, pumps or motors.

2. The use as claimed in claim 1, wherein, based on the total weight of component A, the particle size distribution of component A is bimodal, from 1 to 99% by weight having a median particle size of from 50 to 200 nm, and from 1 to 99% by weight having a median particle size of from 200 to 1000 nm.

3. The use as claimed in claim 1, wherein the sector from which the housings or protective coverings derive is industrial production or processing, agriculture, the production or processing of food or drink, or the medical or laboratory sector.

4. The use as claimed in any of claims 1 to 3, wherein the protective coverings for motors derive from the motor vehicle sector or from the craft sector.

5. A housing or protective covering for a filter, pump, or motor, made from a thermoplastic molding composition as defined in claim 1 or 2.

6. A housing or protective covering as claimed in claim 5, which derives from one of the following sectors: industrial production or processing, agriculture, the processing of food or drink, or the medical or laboratory sector.

7. The use of the molding compositions as claimed in claim 1 or 2 for producing semifinished products, moldings, pipes, profiles, sheets, or films for use in housings or protective coverings for filters, pumps, or motors.

**Revendications**

1. Utilisation d'une matière moulable thermoplastique, consistant en, par rapport à la somme des quantités des composants A, B, C et éventuellement D, qui représente au total 100% en poids,

A    1-48% en poids d'au moins un produit de polymérisation en émulsion en plusieurs phases, sous forme de particules, ayant une température de transition vitreuse inférieure à 0°C dans au moins une phase et une taille moyenne des particules de 50-1000 nm,
composé de

a1:    1-99% en poids d'une première phase A1 sous forme de particules, ayant une température de transition vitreuse inférieure à 0°C,
composée des monomères

a11: 80-99,99% en poids d'un ester d'alkyle en $C_{1-18}$ d'acide acrylique en tant que composant A11,
a12: 0,01-20% en poids d'au moins un monomère polyfonctionnel réticulant, en tant que composant A12,

a2:    1-99% en poids d'une deuxième phase A2 composée des monomères, par rapport à A2,

a21: 40-100% en poids d'unités d'un monomère vinylaromatique en tant que composant A21 et
a22: 0 à 60% en poids d'unités d'un monomère à insaturations éthyléniques en tant que composant A22,

a3:    0 à 50% en poids d'une troisième phase ayant une température de transition vitreuse supérieure à 0°C en tant que composant A3, tandis que la quantité totale des composants A1, A2 et A3 représente 100% en poids, en tant que composant A,

b:    1-48% en poids d'au moins un produit de polymérisation amorphe ou partiellement cristallin composé de 40-100% en poids de styrène et/ou α-méthylstyrène et de 0-60% en poids d'acrylonitrile en tant que composant B,
c:    51-98% en poids de polycarbonates en tant que composant C, et
d:    0-47% en poids d'additifs classiques, et/ou d'additifs sous forme de fibres ou de particules ou de leurs mélanges en tant que composant D

19

pour la préparation de carters et éléments de recouvrement et de leurs produits semi-finis pour filtres, pompes et moteurs.

2. Utilisation selon la revendication 1, **caractérisée par le fait que** la répartition des tailles de particules du composant A est bimodale, tandis que 1-99% en poids présentent une taille moyenne des particules de 50-200 nm et 1-99% en poids présentent une taille moyenne des particules de 200-1000 nm, par rapport au poids total du composant A.

3. Utilisation selon les revendications 1 ou 2, **caractérisé par le fait que** le carter et éléments de recouvrement proviennent des domaines de l'industrie de production et de transformation, de l'agriculture, de la préparation et de la transformation des aliments, du domaine médical ou du domaine des laboratoires.

4. Utilisation selon l'une des revendications 1 à 3, **caractérisé par le fait que** les éléments de recouvrement de moteurs proviennent du domaine des véhicules et du domaine des outils à main.

5. Carters et éléments de recouvrement pour filtres, pompes et moteurs en une matière mouable thermoplastique, telle qu'elle est définie dans l'une des revendications 1 ou 2.

6. Carters et éléments de recouvrement selon la revendication 5, **caractérisés par le fait qu'**ils proviennent du domaine de l'industrie de production et de transformation, de l'agriculture, de la transformation des aliments, de la médecine ou des appareils de laboratoire.

7. Utilisation de matières moulées selon l'une des revendications 1 ou 2 pour l'élaboration de produits semi-finis, de pièces moulées, de tubes, de profilés, de plaques et de feuilles pour utilisation dans des carters et des éléments de recouvrement pour filtres, pompes et moteurs.